(19) **Europäisches Patentamt / European Patent Office / Office européen des brevets**

(11) **EP 3 361 659 B1**

(12) **EUROPEAN PATENT SPECIFICATION**

(45) Date of publication and mention of the grant of the patent:
**08.01.2020 Bulletin 2020/02**

(51) Int Cl.:
*H04L 1/00* (2006.01)　　*H04L 27/233* (2006.01)
*H04L 1/20* (2006.01)

(21) Application number: **17155290.4**

(22) Date of filing: **08.02.2017**

(54) **DPSK RECEIVER MODULE**

DPSK EMPFÄNGERMODUL

MODULE DE RECEPTION DPSK

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.08.2018 Bulletin 2018/33**

(73) Proprietor: **NXP B.V.**
**5656 AG Eindhoven (NL)**

(72) Inventor: **Kessel, Martin**
**Redhill, Surrey RH1 1QZ (GB)**

(74) Representative: **Bradler, Carola Romana**
**NXP Semiconductors Germany GmbH**
**Intellectual Property Group**
**Troplowitzstraße 20**
**22529 Hamburg (DE)**

(56) References cited:
**EP-A1- 2 985 916　　FR-A1- 2 967 320**
**US-B2- 8 275 055**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present disclosure relates to receiving differential phase shift keyed symbols, and in particular, although not exclusively, to a digital audio broadcast receiver implementing differential quadrature phase shift keyed symbol encoding. The invention is defined by the independent claims. Preferred embodiments are described in the dependent claims.

Digital audio broadcast (DAB) is an example of a standardized transmission scheme implemented using differential quadrature phase shift keying (D-QPSK). D-QPSK is a modification of the QPSK modulation. Each QPSK symbol comprises two information bits, which are coded in the complex plane. One information bit is coded in the real part and the other is in the imaginary part. A QPSK symbol can be de-mapped to a pair of bits by deciding between the signs of the real and imaginary part of a symbol. D-QPSK modulation transmits the QPSK symbol as an angle difference between a current symbol and the previous symbol (differential encoding). First a reference symbol is transmitted. The information of the following symbols is coded in the phase difference between the following symbol and the previous symbol.

DAB systems use interleaving in the time and frequency domains. The goal of interleaving is to distribute information over time and frequency to exploit diversity and to suppress burst errors. However, conventional DAB systems still experience a difficulty in providing adequate bit error rates (BERs) when the received signal strength is attenuated.

According to a first aspect of the present disclosure there is provided a receiver module for determine error-corrected bits from differential phase shift keyed, D-PSK, symbols, the receiver module comprising:

    a symbol de-interleaver configured to receive the D-PSK symbols and perform symbol-level de-interleaving to generate de-interleaved D-PSK symbols;
    a symbol demodulator configured to generate demodulated bits based on the de-interleaved D-PSK symbols generated by the symbol de-interleaver;
    a forward error correction decoder configured to provide error-corrected bits based on the demodulated bits; and
    a forward error correction encoder configured to encode the error-corrected bits and to provide the encoded bits to the symbol demodulator,
    wherein the symbol demodulator is further configured to regenerate the demodulated bits based on the encoded bits.

The architecture of the receiver module may enable the implementation of iterative decoding (turbo-D-PSK) with reduced memory requirements and reduced decoding latency in a differential phase shift keyed system. Due to the implementation of iterative decoding, the sensitivity of a DAB receiver, for example, comprising the receiver module may be improved by several decibels (dB) compared to a state of the art DAB receiver.

The symbol demodulator, forward error correction decoder and forward error correction encoder may be arranged to provide a loop for iterative regeneration of the demodulated bits. The symbol demodulator may be configured to generate a subsequent iteration of demodulated bits based on the demodulated bits and encoded bits that are based on a previous iteration of the demodulated bits. The loop may be downstream of the symbol de-interleaver. The symbol de-interleaver may be outside of the loop as a single de-interleaver stage. The loop may be a turbo code loop. The receiver module or loop may not comprise a bit-level de-interleaver.

The forward error correction encoder may comprise a convolution encoder. The forward error correction decoder may comprise a maximum likelihood algorithm decoder. Symbol-level de-interleaving may comprise time domain de-interleaving. Symbol-level de-interleaving may comprise frequency domain de-interleaving. The error-corrected bits are hard bits. The error-corrected bits are soft bits (or soft bit likelihood ratios). The demodulated bits are hard bits. The demodulated bits are soft bits (or soft bit likelihood ratios).

The receiver module may comprise a channel estimation unit. The channel estimation unit may be configured to generate a channel estimation using, or based on, the encoded bits or re-encoded symbols.

The D-PSK symbols may be binary, quadrature or higher order differential phase shift keyed symbols.

According to a further aspect of the disclosure there is provided a digital audio broadcast, DAB, receiving device having a tuner incorporating the receiver module.

The receiver module may be configured to demodulate symbols of a particular frame of a DAB broadcast based on symbols of a neighbouring frame of a DAB broadcast.

According to a further aspect of the disclosure there is provided a method for deriving error-corrected bits from differential phase shift keyed, D-PSK, symbols, comprising:

    receiving D-PSK symbols;
    performing symbol-level de-interleaving of the D-PSK symbols to generate de-interleaved D-PSK symbols;
    demodulating the de-interleaved D-PSK symbols to generate demodulated bits; and,
    iteratively:

        performing forward error correction decoding to provide error-corrected bits based on the demodulated bits;
        performing forward error correction encoding the error-corrected bits to provide encoded bits; and
        generating subsequent demodulated bits based on the encoded bits and the de-interleaved D-PSK symbols.

According to a further aspect of the disclosure there is provided a computer program configured to cause a computer to implement the method.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

US 2009/129493 (A1) relates to receivers and methods for receiving multi-carrier differentially modulated signals utilizing iterative decision-directed differential detection. FR 2,967,320 (A1) relates to a method involves carrying out de-interleaving processes before performing turbo-demodulation process and convolutional decoding process. The turbo-demodulation and convolutional decoding processes are carried out repeatedly. The convolutional decoding process is carried out based on soft output Viterbi algorithm (SOVA). EP2985916 (A1) relates to a receiver performing iterative demodulation and decoding, including: a posteriori probability demodulator configured to receive an input digital signal and output demodulated data; a deinterleaver configured to deinterleave the demodulated data; a forward error correction (FEC) decoder configured to error correct the demodulated data; a FEC encoder configured to encode the error corrected demodulated data; an interleaver configured to interleave the FEC encoded data and output the interleaved FEC encoded data to the posteriori probability demodulator; and a symbol compressor/decompressor configured to compress symbol data from the a posteriori demodulator and store the compressed data in a symbol memory and configured to decompress compressed symbol data stored in the symbol memory.

One or more embodiments will now be described by way of example only with reference to the accompanying drawings in which:

Figure 1 shows a schematic block diagram of an example iterative decoding receiver module for deriving error-corrected bits from differential quadrature phase shift keyed, D-QPSK, symbols;
Figure 2 shows a schematic block diagram of another example iterative decoding receiver for deriving error-corrected bits from D-QPSK symbols;
Figure 3 shows a schematic block diagram of an improved receiver module for deriving error-corrected bits from D-QPSK symbols;
Figure 4 shows a flow chart of a method for deriving error-corrected bits from D-QPSK symbols;
Figure 5 shows a schematic block diagram of a more detailed implementation of another improved receiver module;
Figure 6 shows a schematic representation of symbol dependency propagation using the receiver of Figure 3 or Figure 5, or the method of Figure 4;
Figure 7 shows a schematic block diagram of a DAB mode 1 frame structure; and
Figure 8 shows profiles of obtained bit error rates as a function of the signal-to-noise ratio for the receiver of the type shown in Figure 5 for various numbers of decoding iterations.

The bit error rate (BER) of a DAB system may be improved when the received signal strength is attenuated by implementing an iterative decoding scheme. Iterative decoding techniques are known in different areas of digital communication. Prominent examples of iterative decoding include the "turbo-codes". It has been found that iterative decoding in a turbo-code-like way can be used to improve the performance of D-QPSK receivers (e.g. in Digital Audio Broadcast). In an iterative receiver, the received signal is decoded and re-encoded (multiple times). The re-encoded signal is used as a reference signal (a posteriori probability) to improve the decoding process for the next iteration.

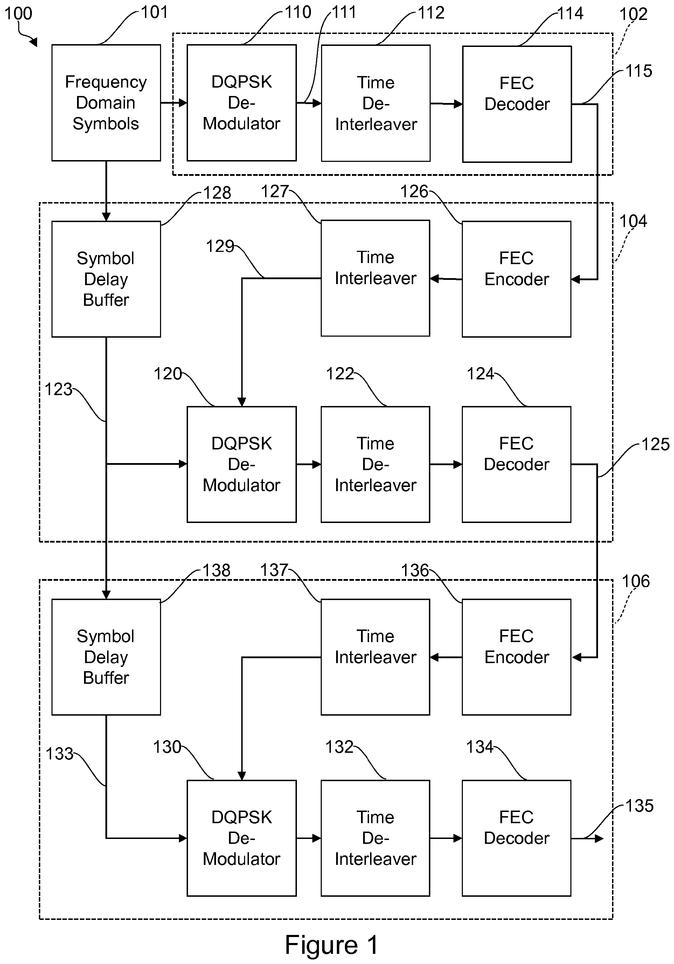

Figure 1 shows a schematic block diagram of an example iterative decoding receiver 100. The receiver 100 comprises functional blocks for implementing a zeroth iteration decoder 102, a first iteration decoder 104 and a second iteration decoder 106. The number of iterations performed by the receiver 100 could be increased by inserting additional decoders that are similar to the first iteration decoder 104 between the first iteration decoder 104 and the second iteration decoder 106.

Each iteration comprises a D-QPSK demodulator 110, 120, 130, a time de-interleaver 112, 122, 132, and a forward error correction (FEC) decoder 114, 124, 134 provided in series. The first and second iteration decoders 104, 106 further comprise a symbol delay buffer 128, 138, a forward error correction (FEC) encoder 126, 136 and a time interleaver 127, 137.

The D-QPSK demodulator 110 of the zeroth order decoder 102 is configured to receive a frequency domain symbol 101. The D-QPSK demodulator 110 compares successive symbols in the frequency domain symbols 101 in order to determine a phase shift and so provide demodulated bit-stream 111 representative of the frequency domain symbols 101. The demodulated bit-stream 111 is de-interleaved and FEC decoded to generate a zeroth iteration decoding result 115. The demodulated bit-stream 111 and zeroth iteration decoding result 115 may be provided as streams of soft bits that are representative of respective probabilities that each of the bits in the bit-stream represents a particular value. The zeroth iteration decoding result 115 is comparable to an output of a conventional, non-iterative DAB receiver.

The zeroth iteration decoding result 115 is provided to the FEC encoder 126 of the first iteration decoder 104. An encoded bit-stream generated by the FEC encoder 126 is interleaved by the time interleaver 127 to provide an interleaved bit-stream 129.

The principle of iterative signal recovery relies on the FEC decoders 114, 124, 134 being able to repair a certain amount of bit errors. Therefore, the re-encoding of decoded signals by respective FEC encoders 104, 106 is assumed to result in an interleaved bit-stream 129 with fewer errors than the original D-QPSK symbols 101. The D-QPSK demodulator 120 of the first order decoder 104 processes the generated interleaved bit-stream 129 together with corresponding D-QPSK symbols 101. The D-QPSK demodulator 120, time de-interleaver 122 and forward error correction (FEC) decoder 124 are provided in series in the first order decoder 104 in a similar manner to the corresponding units in the zeroth order decoder 102. The first order decoder 104 therefore provides a first iteration decoding result 125 that corresponds to the zeroth order decoding result 115 except that the first iteration decoding result 125 is likely to have a lower bit error rate (BER) than the zeroth order decoding result 115. In this way, a so-called "turbo-D-QPSK loop" providing error correction/phase change compensation can be implemented.

The second iteration decoder 106 is functionally similar to the first iteration decoder 104. The second iteration decoder 106 receives the first order decoding result 125 and provides a second order decoding result 135 at its output. Due to the application of a further iteration of signal re-encoding and decoding, the expected bit error rate (BER) in the second order decoding result 135 is lower than that of the first order decoding result 125. Further improvements may be obtained by increasing the order of iterations as discussed above.

A delay is generated because of the processing performed by the de-interleavers/interleavers 112, 122, 127, 132, 137. In order to compensate for delays introduced by the de-interleavers/interleavers 112, 122, 127, 132, 137, a symbol delay buffer 128,138 is provided in the first and second order decoders 104, 106. In the first order decoder 104, the symbol delay buffer 128 receives the frequency domain symbol 101 and provides a delayed symbol 123 to the D-QPSK demodulator 120. In the second order decoder 106, the symbol delay buffer 138 receives the delayed symbol 123 and provides a further delayed symbol 133 to the D-QPSK demodulator 130. Each symbol delay buffer 128, 138 presents a memory storage overhead for the receiver module 100. The way that the data are stored may differ in different implementation.

The difficulty encountered with the iterative DAB receiver 100 is therefore that each iterations requires dedicated de-interleaving and interleaving memories and a delay buffer for the symbol data. Assuming a frequency domain symbol buffer of 8 bit per in-phase and quadrature signal component the delay buffer would require of the order of 1 Mbyte per iteration. Depending on the nature of the feedback the re-encoded data may require 1 bit depth or, for example, 5 bit depth. In this example, the memory requirement per iteration is over 1Mbytes. Furthermore, each iteration will introduce additional latency (when processing DAB standard data) because of the interleaving / de-interleaving process and additional processing latency. This is an issue for fast service switching, which is a desirable attribute for DAB radio receivers.

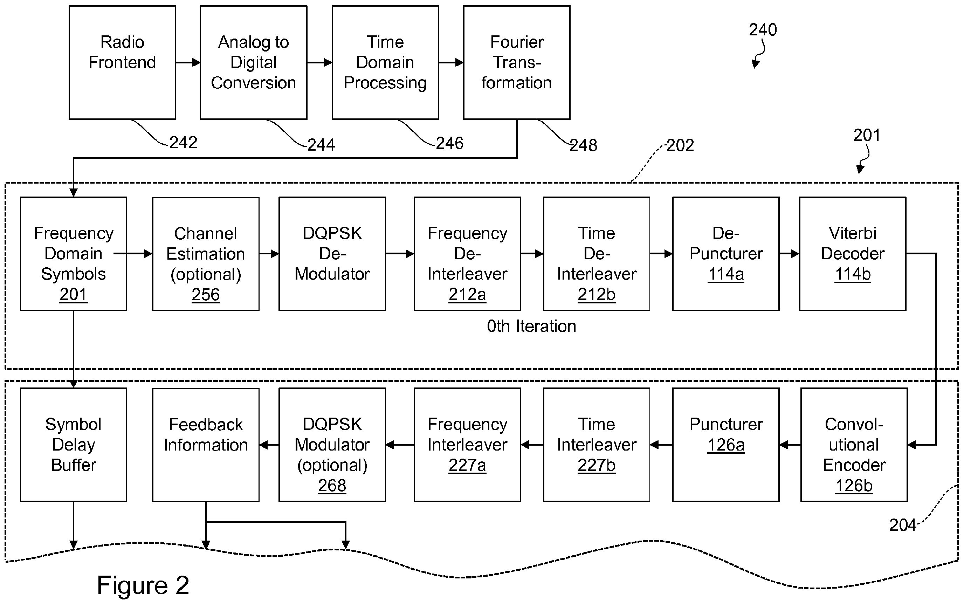

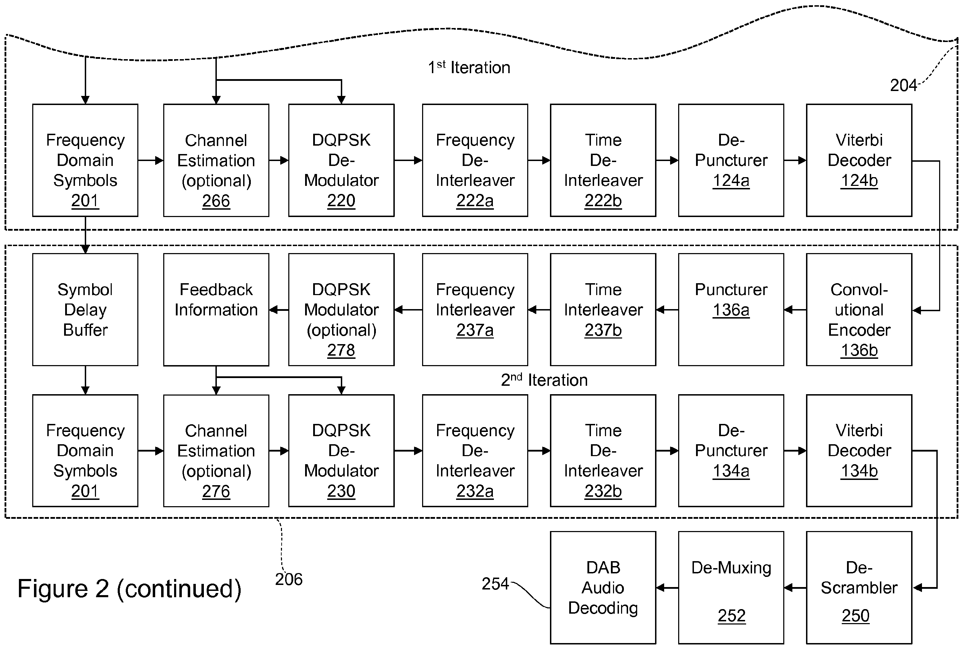

Figure 2, which is provided for completeness, shows a schematic block diagram of a more detailed implementation of an example DAB receiver 240 that includes a receiver module 201 which corresponds to that discussed previously with reference to Figure 1. Similar components between Figures 1 and 2 are referred to using corresponding reference numerals. It will be appreciated that the internal structure of the functional units described with reference to figures 1 and 2 may be implemented in a conventional way.

The DAB receiver 240 provides a sequential arrangement of a radio front end 242, an analogue-to-digital converter 244, a time domain processor 246, a Fourier transformation unit 248, the receiver module 201, a descrambler 250, a demultiplexer 252 and DAB audio decoder 254.

The interleavers and de-interleavers of the decoders 202, 204, 206 of the receiver module 240 comprise frequency interleavers 227a, 237a, frequency de-interleavers 212a, 222a, 232a, time interleavers 227b, 237b and time de-interleavers 212b, 222b, 232b.

The FEC decoders each comprise a de-puncturer 114a, 124a, 134a and a Viterbi decoder 114b, 124b, 134b provided in series. The FEC encoders each comprise a puncturer 126a, 136a and a convolutional encoder 126b, 136b.

In each decoder 202, 204, 206 of the receiver module 240, channel estimation 256, 266, 276 is performed on the frequency domain symbols 201.

In the first and second iterative decoders 204, 206 of the receiver module 240, a D-QPSK modulator 268, 278 is optionally provided between each of the respective frequency interleavers 227a, 237a and the D-QPSK de-modulators 20, 230 to convert interleaved bit-streams outputted by the frequency interleavers 227a, 237a into D-QPSK symbols for treatment by the respective D-QPSK de-modulator 220, 230.

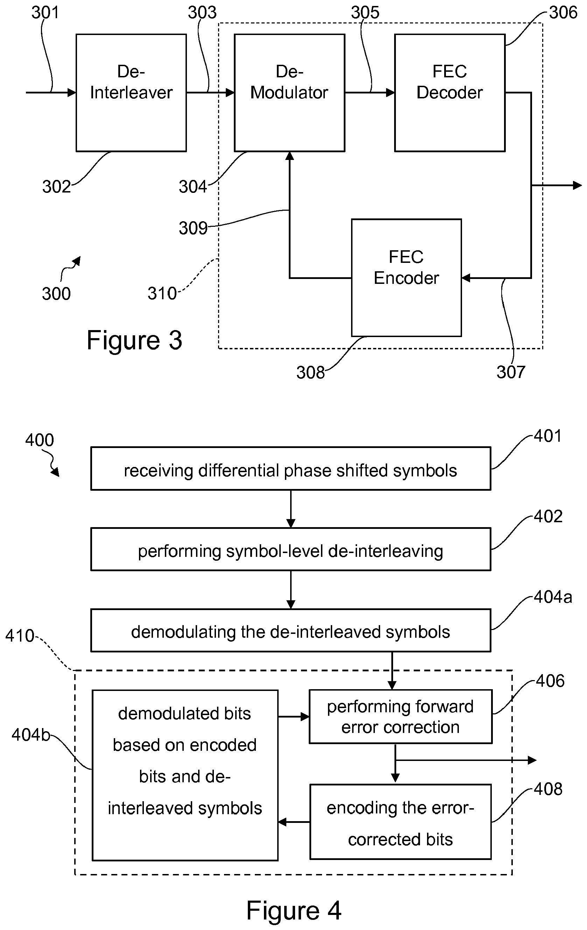

Figure 3 shows a schematic block diagram of an improved receiver module 300 for deriving error-corrected bits from D-QPSK symbols. The improved receiver module 300 may be used in place of the receiver module described previously with reference to Figure 2.

The improved receiver module 300 comprises a symbol de-interleaver 302 and a processing loop 310. The processing loop 310 includes a symbol demodulator 304, a forward error correction (FEC) decoder 306 and a forward error correction (FEC) encoder 308. The processing loop 310 may be considered to provide a turbo loop in the manner provided by turbo codes in other fields. The forward error correction (FEC) decoder 306 and encoder 308 decode the received data and re-encoded the decoded output to generate a posteriori probability (APP) for the next decoding iteration and the symbol demodulator 304 considers the APP to improve the demodulation. This process can be performed for multiple iterations within the same processing loop 310.

The de-interleaver 302 is provided upstream of the processing loop 310. The symbol de-interleaver 302 is configured to receive D-QPSK symbols 301 and perform symbol-level de-interleaving to generate de-interleaved symbols 303. The symbol de-interleaver 302 differs from the de-interleavers described with reference to Figure 2 in that it acts at the symbol level, rather than at the bit-stream level. That is, the symbol de-interleaver 302 provides a processing step that acts on the D-QPSK symbols 301 and occurs before symbol demodulation by the symbol demodulator 304, as opposed to a processing step that acts on demodulated bits generated by a symbol demodulator as in Figure 2. The provision of the symbol de-interleaver 302 requires more memory storage than a corresponding conventional, bit-stream de-interleaver. However, the provision of the symbol de-interleaver 302 before the symbol de-modulator 302 enables the de-interleaver 302 to be provided outside of the processing loop 310. Because the delay elements are no longer required, the receiver module requires only a single, closed processing loop 310 to be provided, rather than the concatenation of multiple iteration decoders that each introduce a latency, as described previously with reference to Figures 1 and 2. By providing the de-interleaver 302 outside of processing loop 310, only a single de-interleaver 302 is required in the receiver module 300, as opposed to the separate de-interleavers that are required for each iteration of the receiver modules described previously with reference to Figures 1 and 2. Similarly, because the de-interleaver 302 is provided outside of the processing loop 310, the delay buffers that were required in each of the iterations of the receiver modules of Figures 1 and 2 in order to retain synchronisation between the signal parts due to the delay introduced by the de-interleavers are also not required. All interleaving and delay buffer steps are therefore excluded from the processing loop 310. The memory for the D-QPSK symbols of the de-interleaver 302 may have more than the 5 bit per soft-bit that is conventionally used. With an 8 bit depth instead of a 5 bit depth, the de-interleaver 302 requires additional memory compared to a receiver with only a zero order decoder. In practice, an implementation might incur a modest fixed cost in additional memory compared to a traditional receiver independently of the number of iteration, whereas each iteration decoders of the receiver modules described with reference to Figures 1 and 2 requires additional memory. A limiting factor for the number of iteration that should be performed by the receiver module might be the speed of the processing of the turbo-loop 310, which is typically much faster than the latency for each iteration in the receiver module of Figures 1 and 2. In this way, the overall memory requirements and latency of the receiver module 300 is reduced compared to the examples described previously with reference to Figures 1 and 2.

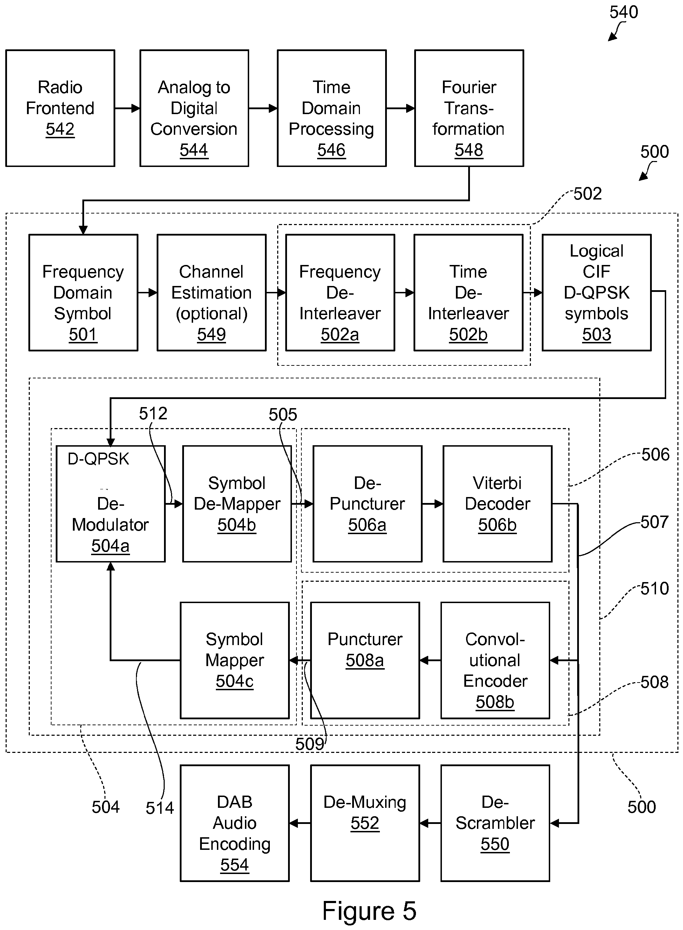

The function of the symbol demodulator 304 is a similar to that described for the first or second order decoder of the receiver modules illustrated in Figures 1 and 2. The symbol demodulator 304 is configured to receive the de-interleaved symbols 303 from the symbol de-interleaver 302 and to generate demodulated bits 305 based on the de-interleaved symbols 303. The symbol demodulator 304 also receives feedback 309 from the FEC encoder 308 to enable generation of subsequent demodulated bits 305 based on a combination of the de-interleaved symbols 303 and the feedback 309, as discussed further below with reference to Figures 4 and 5.

The FEC decoder 306 may comprise a maximum likelihood algorithm decoder, such as a Viterbi decoder or a BCJR decoder, as is known in the art of turbo codes. The FEC decoder 306 is configured to receive the demodulated bits 305 and to generate error-corrected bits 307 based on the demodulated bits 305. The error-corrected bits 307 may be provided as an output of the receiver module 300.

The FEC encoder 308 may comprise a convolution encoder, as is known in the art of turbo codes. The FEC encoder 308 is configured to receive the error-corrected bits 307, to re-encode the error-corrected bits 307 and to provide the encoded error-corrected bits as feedback 309 to the symbol demodulator 304. The error-corrected bits 307 or encoded error-corrected bits may be provided as hard bits, in which case the implementation complexity of the receiver module 500 may be reduced. Alternatively, the error-corrected bits 307 or encoded error-corrected bits may be provided as soft bits (a multi-bit value that indicates a probability of a particular state of a single bit), in which case the error-correction performance of the receiver module 500 may be improved.

Figure 4 illustrates a method 400 for deriving error-corrected bits from differential quadrature phase shift keyed (D-QPSK) symbols, which may be implemented using a radio module such as that described above with reference to Figure 3. After receiving 401 D-QPSK symbols, symbol-level de-interleaving of the D-QPSK symbols is performed 402 to generate de-interleaved symbols. The de-interleaved symbols are demodulated 404a to generate a demodulated bit-stream.

Subsequently, the method provides a processing loop 410 in which:

- forward error correction decoding of the demodulated bits is performed 406 to generate error-corrected bits;

- the error-corrected bits are encoded to provide encoded bits; and
- subsequent demodulated bits are generated 404b based on the encoded bits and the de-interleaved symbols.

The processing loop 410 may be performed repeatedly to enable iterative generation of the demodulated bits. In each subsequent iteration, the demodulated bits of the subsequent iteration are based on encoded bits that are generated based on a previous iteration of demodulated bits. In this way, the use of a posteriori probability enables the accuracy of the demodulation to be increased for successive iterations and so remove errors that have been introduced into the received signal prior to its reception.

The receiver module of Figure 3 or the method of Figure 4 may be used to derive error corrected bits from differential quadrature phase shift keyed (D-QPSK) symbols in various system standards, including digital audio broadcasting (DAB). D-QPSK is also used in some satellite communication standards. Indeed, the receiver module of Figure 3 or the method of Figure 4 may be implemented in other differential phase shift keyed systems, such as binary (D-BPSK) or higher order (D-mPSK), in order to improve decoding performance.

Figure 5 shows a schematic block diagram of a DAB 540 receiver comprising another improved receiver module 500. The DAB receiver 540 provides a sequential arrangement of a radio front end 542, an analogue-to-digital converter 544, a time domain processor 546, a Fourier transformation unit 548, the receiver module 500, a descrambler 550, a demultiplexer 552 and a DAB audio decoder 554.

The receiver module 500 is generally similar arrangement to that described previously with reference to Figure 3. The improved receiver module 500 comprises a symbol de-interleaver 502 and a processing loop 510 including a symbol demodulator 504, a forward error correction (FEC) decoder 506 and a FEC encoder 508. Similar to the previous discussion with reference to figure 3, the architecture of the receiver module 500 overcomes the need for multiple de-interleaving buffers and delay buffer memories that were required in order to provide iterative decoding in the examples of Figures 1 and 2.

In this example, the de-interleaver 502 provides a frequency de-interleaver 502a and a time de-interleaver 502b provided in series in order to act on frequency domain symbols 501 and provide de-interleaved D-QPSK symbols 503.

In this example, the FEC decoder 306 comprises a de-puncturer 506a and a Viterbi decoder 506b and the FEC encoder 308 comprises a convolution encoder 508b and a puncturer 508a, as is known in the art of turbo codes. As in the previous example, the FEC decoder 306 receives the output of the demodulator 504 and provides an error corrected DAB output signal 507. The error corrected DAB output signal 507 is provided to the descrambler 550. Also as in the previous example, the FEC encoder 308 receives the error-corrected DAB output signal 507 and provides encoded bits as feedback to the demodulator 504.

Further details of the internal structure of the symbol modulator 504 are provided in this example. The symbol demodulator 504 comprises a D-QPSK symbol demodulator 504a, a symbol de-mapper 504b and a symbol de-mapper 504c. The D-QPSK symbol demodulator 504a operates on de-interleaved symbols 503 and determines QPSK symbols based on the phase difference between a particular symbol and the immediately preceding symbol in the stream of de-interleaved symbols 503. The QPSK symbols determination is also weighted based on feedback symbols 511. The feedback symbols 511 are generated by the symbol mapper 504c based on the encoded bits 509 provided by the FEC encoder 508. The symbol de-mapper 504b converts QPSK symbols 512 determined by the D-QPSK demodulator 504a to a bit-stream by mapping each determine symbol with an associated bit pairing.

The D-QPSK de-modulator 504a may also use the feedback signal 509 to improve the log-likelihood-ratio (LLR)/soft-bit information for the next decoding round, or perform channel estimation and/or phase correction between the symbols to compensate for fading / Doppler effects.

The implementation of D-QPSK symbol de-interleaving, as performed in the receiver module 500 of Figure 5, instead of a (soft-)bit level de-interleaving, as performed in the receiver modules of Figures 1 and 2, is possible if the (soft-) bits generate by a D-QPSK symbol pair end up in the same time slot of the time-de-interleaving. This is possible in the DAB standard, for example, because the (soft-) bits generate by a D-QPSK symbol always end up at a bit distance of 192, 384, 768, 1536. Time-de-interleaving for DAB may be implemented using 16 different time slots and sorting all of the bits having the same "bit position modulo 16" results into the same time slot. Since the in-phase and quadrature superposition of the de-mapper is a multiple of 192, the modulo 16 result of the in-phase and quadrature position is always the same and that means that both bit of the D-QPSK signal are ending up in the same time slot.

Optionally, channel estimation 549 may be performed on frequency domain symbols 501. Alternatively, the channel estimation unit may be provided to generate a channel estimation based on the encoded bits provided as feedback 509 or based on the corresponding feedback symbols 511. The channel estimation may be a phase correction between D-PSK symbols or a channel impulse response estimation.

As discussed previously, a D-QPSK demodulator in a zero order decoder operates on D-QPSK symbols and determines QPSK symbols based on the phase difference between a particular symbol and the immediately preceding symbol in the symbol stream. The determined QPSK symbols may then be converted to a bitstream by symbol de-mapping, which maps each determine symbol with an associated bit pairing.

In first and higher order decoders, such as the examples discussed with reference to Figures 3 and 5 for a particular iteration the D-QPSK demodulator also takes into account estimates of the received signal generated during a previous iteration of the demodulator. Improvement of LLRs/soft-bits by the D-QPSK de-modulator may be done in different ways. The turbo-D-QPSK decoding may be implemented by adding a weighted estimate of the received symbol, estimated from the neighbouring symbol and the reference (feedback) information, to the received symbol itself. For example, a hard decision feedback scheme implemented by the processing loop may operate as follows:

- assuming A, B are two consecutive DQPSK symbols, which carry information in a particular QPSK symbol c, c = B * conj(A) for ideal reception, after decoding and re-encoding in the processing loop, an improved version c' is generated.
- to improve the softbits for the next (first) iteration, the D-QPSK de-modulator 504a may calculate a waited sum to improve the next iteration of symbols A', B' (w is a weighting between 0 and 1):

$$A' = w * B * conj(c') + (1 - w) * A$$

$$B' = w * A * c' + (1 - w) * B$$

In subsequent (second and further iterations), further weightings may be applied for the symbols generated in each preceding iteration. Such weighting leads to a cascade of dependencies between symbols over the multiple iterations of decoding. In this way, a chain of dependencies between symbols is formed.

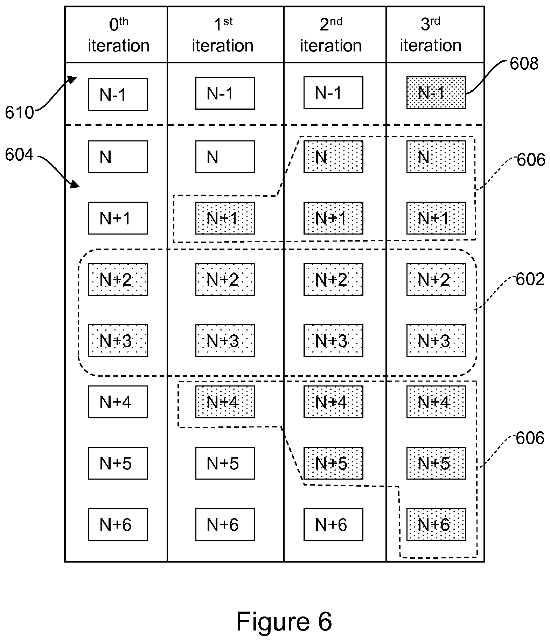

Figure 6 shows a schematic representation of symbol dependency propagation using the receiver of Figure 3 or Figure 5 or the method of Figure 4. In this example, a demodulator is determining a QPSK symbol value associated with a transition between symbol N+2 and symbol N+3 in a sequence of symbols N-1...N+6. During the zeroth iteration, only the current symbols 602 (N+2, N+3) are considered when generating a demodulated symbol. In a first iteration, first (nearest) neighbouring symbols 606 (N+1, N+4) also affect the determination of the demodulated symbol. In a second iteration, second neighbouring symbols 606 (N, N+5) also affect the determination of the demodulated symbol. In a third iteration, third neighbouring symbols 606, 608 (N-1, N+6) also affect the determination of the demodulated symbol. In this example, one of the third neighbouring singles 608 (N-1) is part of a preceding frame 610 to the current frame 604 in which the current symbols 602 (N+2, N+3) are present. In this way, the implementation of the iterative decoder can lead to information propagation across frames when multiple iterations are applied. DAB frames have fixed borders and traditional DAB receivers may start decoding at such frame borders. Because of the dependency propagation between symbols over successive iterations, dependencies may be generated outside of a current frame. Partial frame decoding of neighbouring frames that occur before or after the current frame may be used to retain information from such dependencies. That is, the symbol demodulator in some examples may be configured to demodulate symbols of a particular frame of a DAB broadcast based on symbols of a temporally neighbouring frame in order to potentially improve the demodulation accuracy of symbols adjacent to frame boundaries. Alternatively, the decoder may discard information that is present in dependencies between symbols in different frames.

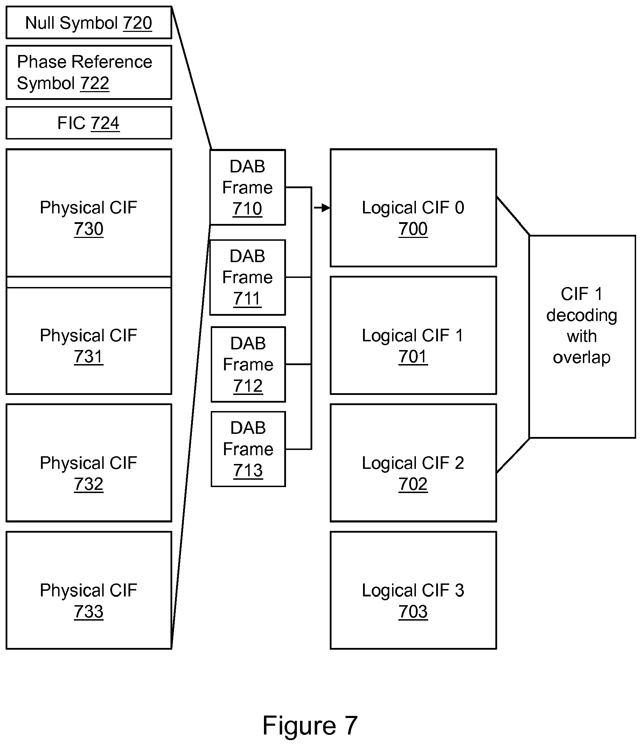

In the upcoming DAB standard V2.1.1, only mode 1 out of former four DAB modes is defined. Figure 7 shows a schematic block diagram of a DAB mode 1 frame structure.

Logical common interleaved frames (CIF) are transmitted in sequence. A series of logical CIFs 700-703 and corresponding physical frames 730-731 are shown in Figure 7. The logical CIFs 700-703 and physical CIFs 730-731 each consist of the same amount of information. Each logical frame is distributed on four DAB frames 710-713. Each physical CIF 730-733 consist of parts of 16 logical CIFs 700-703 because of the time-interleaving process. A DAB mode 1 frame consists of a null symbol 720 indicating the start of a frame, a phase reference symbol 722 to enable subsequent D-QPSK symbols to be decoded, a fast information channel (FIC) 724 that can convey service information, and four physical common interleaved frames (CIF) 730-734. Each logical CIF is distributed across four DAB frames 710-713. In this way, each logical CIF comprises symbol from 16 physical CIFs. That means that ¾ of the carriers at the CIF edge have neighbour carriers in a neighbour CIF. By implementing sliding decoding over a plurality of logical CIFs 700-702 to obtain information for a particular CIF 701, the ¾ of the required references can be generated, which may improve decoder performance at the frame edges. The partial frame decoding is possible because the code word goes along the time in the CIF. Therefore, only a portion of the end of the previous CIF and a portion of begin of the next CIF needs to be included into the decoding process of the current CIF. In some examples a demodulator may be configured to demodulate symbols of a particular logical common interleaved frame, CIF, of a DAB broadcast based on symbols of a temporally neighbouring logical CIF. In particular, one or more symbols in the neighbouring frame that are adjacent to, or at, the edge of the neighbouring frame that abuts the particular CIF may be used to demodulate the symbols in the particular frame.

The FIC 724 at the start of the frame does not involve time-interleaving. For the rest of the frame, the coding is similar to the CIF's coding. It would be possible to decode the FIC in a turbo loop. Such decoding may improve the FIC reception and may provide improved reference information for the starting edge of the first CIF in a frame. FIC processing may therefore be used to generate references for the start of the following CIF. Because of the DAB "Null symbol" 730, no further optimization for the end of each frame may be possible.

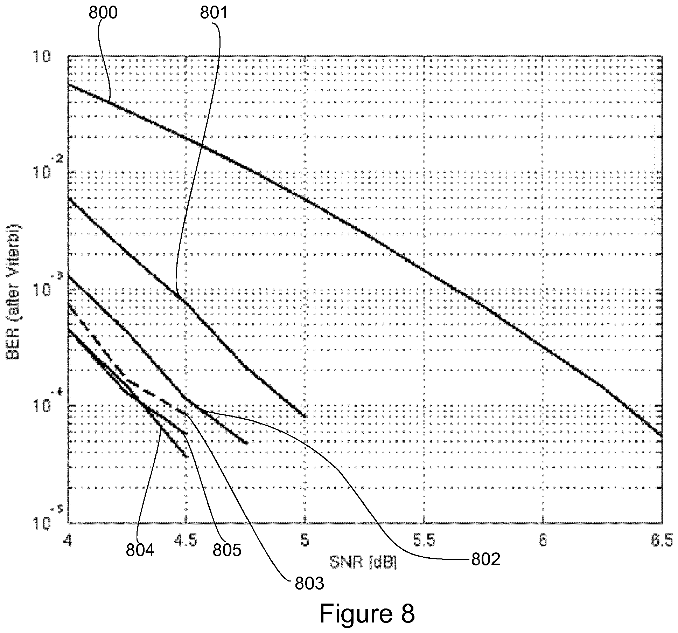

Figure 8 shows simulated profiles 800-805 of obtained bit error rates (BER), on a logarithmic scale, as a function of signal-to-noise ratio (SNR). The profiles include a profile 800 for a conventional DAB receiver and profiles 801-805 for first to fifth iterations performed by a receiver of the type shown in Figure 5 implemented with a hard-decision feedback loop. In each case, the modelled receiver is a single antenna DAB receiver with additive white Gaussian noise (AWGN) and using EEP3A forward error correction and a simple conjugate complex based D-QPSK demodulator.

Substantial improvements in performance are obtained for the first to third iterations. For example, the profile 803 of the third iteration has a SNR about 2 dB lower than the conventional DAB profile 800 for a comparable bit error rate. In experimental simulations, a gain of 2.3 dB was seen for coherent demodulation. It is expected that up to 3 dB gain in an AWGN channel may be obtained by applying soft-decision feedback information in the loop, instead of the hard-bit information modelled in Figure 8. Furthermore, it is assumed to get a higher gain in fading channels using soft-decision feedback information.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

**Claims**

1. A receiver module (300) for determining error-corrected bits from differential phase shift keyed, D-PSK, symbols, the receiver module (300) comprising:

   a symbol de-interleaver (302) configured to receive the D-PSK symbols (301) and perform symbol-level de-interleaving to generate de-interleaved D-PSK symbols (303);
   a symbol demodulator (304) configured to generate demodulated bits (305) based on the de-interleaved D-PSK symbols (303) generated by the symbol de-interleaver (302);
   a forward error correction decoder (306) configured to provide error-corrected bits (307) based on the demodulated bits (305); and

a forward error correction encoder (308) configured to encode the error-corrected bits (307) and to provide encoded bits (309) to the symbol demodulator (304),

wherein the symbol demodulator (304) is further configured to regenerate the demodulated bits (305) based on the encoded bits (309), wherein the symbol demodulator (304), forward error correction decoder (306) and forward error correction encoder (306) are arranged to provide a loop for iterative regeneration of the demodulated bits, and wherein the loop is downstream of the symbol de-interleaver (302).

2. The receiver module (300) of claim 1, wherein the symbol demodulator (304) is configured to generate a subsequent iteration of demodulated bits based on the demodulated bits and encoded bits (309) that are based on a previous iteration of the demodulated bits (305).

3. The receiver module (300) of claim 2, wherein the symbol de-interleaver is outside of the loop as a single de-interleaver stage.

4. The receiver module (300) of any preceding claim, wherein the forward error correction encoder (308) comprises a convolution encoder.

5. The receiver module (300) of any preceding claim, wherein the forward error correction decoder (306) comprises a maximum likelihood algorithm decoder.

6. The receiver module (300) of any preceding claim, wherein the symbol-level de-interleaving comprises time domain de-interleaving and frequency domain de-interleaving.

7. The receiver module (300) of any preceding claim, wherein the error-corrected bits and demodulated bits are soft bits.

8. The receiver module (300) of any preceding claim comprising a channel estimation unit configured to generate a channel estimation using the encoded bits.

9. The receiver module (300) of any preceding claim, wherein D-PSK symbols (301) are differential quadrature phase shift keyed symbols.

10. A digital audio broadcast, DAB, receiving device having a tuner incorporating the receiver module (300) of any preceding claim.

11. The DAB receiving device of claim 10, wherein the receiver module (300) is configured to demodulate symbols of a particular frame of a DAB broadcast based on symbols of a neighbouring frame of the DAB broadcast.

12. A method (400) for deriving error-corrected bits from differential phase shift keyed, D-PSK, symbols, comprising:

receiving (401) D-PSK symbols;
performing symbol-level de-interleaving (402) of the D-PSK symbols to generate de-interleaved D-PSK symbols;
demodulating (404a) the de-interleaved D-PSK symbols to generate demodulated bits; and, in a loop (410) downstream of the symbol de-interleaving (402),
iteratively:

performing forward error correction decoding (406) to provide error-corrected bits based on the demodulated bits;
performing forward error correction encoding (408) the error-corrected bits to provide encoded bits; and
generating (404b) subsequent demodulated bits based on the encoded bits and the de-interleaved D-PSK symbols.

13. A computer program comprising instructions which, when the program is executed by a computer, cause the computer to implement the method (400) of claim 12.

**Patentansprüche**

1. Ein Empfängermodul (300) zum Bestimmen von fehlerkorrigierten Bits aus differenziellen phasenumgetasteten, D-PSK, Symbolen, wobei das Empfängermodul (300) aufweist:

einen Symbol Entschachteler (302), welcher konfiguriert ist zum

Empfangen des D-PSK Symbols (301) und Ausführen von Symbolebene Entschachteln zum Erzeugen von entschachtelten D-PSK Symbolen (303);

einen Symbol Demodulator (304), welcher konfiguriert ist zum Erzeugen von demodulierten Bits (305) basierend auf den entschachtelten D-PSK Symbolen (303), welche mittels des Symbol Entschachtelers (302) erzeugt werden;
ein Vorwärtsfehlerkorrektur Dekoder (306), welcher konfiguriert ist zum Bereitstellen von fehlerkorrigierten Bits (307) basierend auf den demodulierten Bits (305); und
einen Vorwärtsfehlerkorrektur Kodierer (308), welcher konfiguriert ist zum Kodieren der fehlerkorrigierten Bits (307) und zum Bereitstellen von kodierten Bits (309) zu dem Symbol Demodulator (304),

wobei der Symbol Demodulator (304) ferner konfiguriert ist zum Regenerieren der demodulierten Bits (305) basierend auf den kodierten Bits (309), wobei der Symbol Demodulator (304), der Vorwärtsfehlerkorrektur Dekoder (306) und der Vorwärtsfehlerkorrektur Kodierer (306) eingerichtet sind zum Bereitstellen einer Schleife für eine iterative Regeneration der demodulierten Bits, und wobei die Schleife dem Symbol Entschachteler (302) nachgeschaltet ist.

2. Das Empfängermodul (300) gemäß Anspruch 1, wobei der Symbol Demodulator (304) konfiguriert ist zum Erzeugen einer nachfolgenden Iteration der demodulierten Bits basierend auf den demodulierten Bits und den kodierten Bits (309), welche auf einer vorherigen Iteration der demodulierten Bits (305) basieren.

3. Das Empfängermodul (300) gemäß Anspruch 2, wobei der Symbol Entschachteler außerhalb der Schleife als eine einzelne Entschachteler Stufe ist.

4. Das Empfängermodul (300) gemäß irgendeinem vorangehenden Anspruch, wobei der Vorwärtsfehlerkorrektur Kodierer (308) einen Faltungskodierer aufweist.

5. Das Empfängermodul (300) gemäß irgendeinem vorangehenden Anspruch, wobei der Vorwärtsfehlerkorrektur Dekoder (306) einen maximale Wahrscheinlichkeit Algorithmus Dekoder aufweist.

6. Das Empfängermodul (300) gemäß irgendeinem vorangehenden Anspruch, wobei das Symbolebene Entschachteln ein Zeitbereich Entschachteln und ein Frequenzbereich Entschachteln aufweist.

7. Das Empfängermodul (300) gemäß irgendeinem vorangehenden Anspruch, wobei die fehlerkorrigierten Bits und die demodulierten Bits Soft-Bits sind.

8. Das Empfängermodul (300) gemäß irgendeinem vorangehenden Anspruch, aufweisend eine Kanal Schätzeinheit, welche konfiguriert ist zum Erzeugen einer Kanalschätzung unter Verwendung der kodierten Bits.

9. Das Empfängermodul (300) gemäß irgendeinem vorangehenden Anspruch, wobei die D-PSK Symbole (301) differenzielle Quadratur phasenumgetastete Symbole sind.

10. Eine digitale Audioübertragung, DAB, Empfängervorrichtung, welche einen Tuner hat, welcher das Empfängermodul (300) gemäß irgendeinem vorangehenden Anspruch umfasst.

11. Die DAB Empfängervorrichtung gemäß Anspruch 10, wobei das Empfängermodul (300) konfiguriert ist zum Demodulieren von Symbolen eines bestimmten Rahmens einer DAB Übertragung basierend auf Symbolen eines benachbarten Rahmens der DAB Übertragung.

12. Ein Verfahren (400) zum Ableiten von fehlerkorrigierten Bits aus differenziellen phasenumgetasteten, D-PSK, Symbolen, aufweisend:

Empfangen (401) von D-PSK Symbolen;
Ausführen von Symbolebene Entschachteln (402) der D-PSK Symbole zum Erzeugen von entschachtelten D-PSK Symbolen;
Demodulieren (404a) der entschachtelten D-PSK Symbole zum Erzeugen von demodulierten Bits; und, in einer Schleife (410), welche dem Symbol Entschachteln (402) nachgeschaltet ist, iteratives:

Ausführen von Vorwärtsfehlerkorrektur Dekodierens (406) zum Bereitstellen von fehlerkorrigierten Bits basierend auf den demodulierten Bits;
Ausführen von Vorwärtsfehlerkorrektur Kodierens (408) der fehlerkorrigierten Bits zum Bereitstellen von kodierten Bits; und
Erzeugen (404b) von nachfolgenden demodulierten Bits basierend auf den kodierten Bits und den entschachtelten D-PSK Symbolen.

13. Ein Computerprogramm aufweisend Anweisungen, welche, wenn das Programm mittels eines Computers ausgeführt wird, den Computer veranlassen, das Verfahren (400) gemäß Anspruch 12 zu implementieren.

## Revendications

1. Module récepteur (300) pour déterminer des bits à erreur corrigée de symboles à modulation différentielle par déplacement de phase, D-PSK, le module récepteur (300) comprenant :

un désentrelaceur de symboles (302) configuré pour recevoir les symboles D-PSK (301) et effectuer un désentrelacement au niveau des symboles pour générer des symboles D-PSK désentrelacés (303) ;
un démodulateur de symboles (304) configuré pour générer des bits démodulés (305) sur la base des symboles D-PSK désentrelacés (303) générés par le désentrelaceur de symboles (302),

un décodeur de correction anticipée d'erreur (306) configuré pour fournir des bits à erreur corrigée (307) sur la base des bits démodulés (305) ; et

un codeur de correction anticipée d'erreur (308) configuré pour coder les bits à erreur corrigée (307) et fournir des bits codés (309) au démodulateur de symboles (304),

dans lequel le démodulateur de symboles (304) est configuré en outre pour régénérer les bits démodulés (305) sur la base des bits codés (309), dans lequel le démodulateur de symboles (304), le décodeur de correction anticipée d'erreur (306) et le codeur de correction anticipée d'erreur (306) sont agencés pour fournir une boucle de régénération itérative des bits démodulés, et dans lequel la boucle est située en aval du désentrelaceur de symboles (302).

2. Module récepteur (300) selon la revendication 1, dans lequel le démodulateur de symbole (304) est configuré pour générer une itération suivante de bits démodulés en fonction des bits démodulés et des bits codés (309) qui sont basés sur une itération précédente des bits démodulés (305).

3. Module récepteur (300) selon la revendication 2, dans lequel le désentrelaceur de symboles est situé en dehors de la boucle en tant qu'étage désentrelaceur unique.

4. Module récepteur (300) selon n'importe quelle revendication précédente, dans lequel le codeur de correction anticipée d'erreur (308) comprend un codeur convolutionnel.

5. Module récepteur (300) selon n'importe quelle revendication précédente, dans lequel le décodeur de correction anticipée d'erreur (306) comprend un décodeur à algorithme de vraisemblance maximale.

6. Module récepteur (300) selon n'importe quelle revendication précédente, dans lequel le désentrelacement au niveau des symboles comprend un désentrelacement dans le domaine temps et un désentrelacement dans le domaine fréquence.

7. Module récepteur (300) selon n'importe quelle revendication précédente, dans lequel les bits à erreur corrigée et les bits démodulés sont des bits programmables.

8. Module récepteur (300) selon n'importe quelle revendication précédente comprenant une unité d'estimation de canal configurée pour générer une estimation de canal en utilisant les bits codés.

9. Module récepteur (300) selon n'importe quelle revendication précédente, dans lequel les symboles D-PSK (301) sont des symboles à modulation quadratique différentielle par déplacement de phase.

10. Dispositif de réception de diffusion audionumérique, DAB, comportant un synthétiseur incorporant le module récepteur (300) selon n'importe quelle revendication précédente.

11. Dispositif DAB selon la revendication 10, dans lequel le module récepteur (300) est configuré pour démoduler des symboles d'une trame particulière d'une diffusion DAB sur la base des symboles d'une trame voisine de la diffusion DAB.

12. Procédé (400) de dérivée de bits à erreur corrigée de symboles à modulation différentielle par déplacement de phase, D-PSK, comprenant :

la réception (401) de symboles D-PSK ;
l'exécution d'un désentrelacement au niveau des symboles (402) des symboles D-PSK pour générer des symboles D-PSK désentrelacés ;
la démodulation (404a) des symboles D-PSK désentrelacés pour générer des bits démodulés, et, dans une boucle (410) située en aval du désentrelacement au niveau des symboles (402), de manière itérative :

la réalisation d'un décodage de correction anticipée d'erreur (406) pour fournir des bits à erreur corrigée sur la base des bits démodulés ; et
la réalisation d'un codage de correction anticipée d'erreur (408) des bits à erreur corrigée pour fournir des bits codés ; et
la génération (404b) de bits démodulés sur la base des bits codés et des symboles D-PSK désentrelacés.

13. Programme informatique comprenant des instructions qui, quand le programme est exécuté par un ordinateur, amènent l'ordinateur à mettre en œuvre le procédé (400) selon la revendication 12.

Figure 1

Figure 2

EP 3 361 659 B1

EP 3 361 659 B1

1st Iteration

| Frequency Domain Symbols 201 | Channel Estimation (optional) 266 | DQPSK De-Modulator 220 | Frequency De-Interleaver 222a | Time De-Interleaver 222b | De-Puncturer 124a | Viterbi Decoder 124b |

204

| Symbol Delay Buffer | Feedback Information | DQPSK Modulator (optional) 278 | Frequency Interleaver 237a | Time Interleaver 237b | Puncturer 136a | Convol-utional Encoder 136b |

2nd Iteration

| Frequency Domain Symbols 201 | Channel Estimation (optional) 276 | DQPSK De-Modulator 230 | Frequency De-Interleaver 232a | Time De-Interleaver 232b | De-Puncturer 134a | Viterbi Decoder 134b |

206

Figure 2 (continued)

254

| DAB Audio Decoding | De-Muxing 252 | De-Scrambler 250 |

301    303         305              306

De-
Interleaver    De-
Modulator    FEC
Decoder

302        304

309

300    310

## Figure 3

308              307

400

receiving differential phase shifted symbols    401

performing symbol-level de-interleaving    402

demodulating the de-interleaved symbols    404a

410

demodulated bits
based on encoded
bits and de-
interleaved symbols    performing forward
error correction    406

404b    encoding the error-
corrected bits    408

## Figure 4

540

500

502

| Radio Frontend 542 | → | Analog to Digital Conversion 544 | → | Time Domain Processing 546 | → | Fourier Trans-formation 548 |

| Frequency Domain Symbol 501 | → | Channel Estimation (optional) 549 | → | Frequency De-Interleaver 502a | → | Time De-Interleaver 502b | → | Logical CIF D-QPSK symbols 503 |

512    505    506

507

510

508

D-QPSK

| De-Modulator 504a | → | Symbol De-Mapper 504b | → | De-Puncturer 506a | → | Viterbi Decoder 506b |

| Symbol Mapper 504c | ← | Puncturer 508a | ← | Convol-utional Encoder 508b |

509

504    514

500

| DAB Audio Encoding 554 | ← | De-Muxing 552 | ← | De-Scrambler 550 |

Figure 5

| 0th iteration | 1st iteration | 2nd iteration | 3rd iteration |
|---|---|---|---|
| N-1 | N-1 | N-1 | N-1 |
| N | N | N | N |
| N+1 | N+1 | N+1 | N+1 |
| N+2 | N+2 | N+2 | N+2 |
| N+3 | N+3 | N+3 | N+3 |
| N+4 | N+4 | N+4 | N+4 |
| N+5 | N+5 | N+5 | N+5 |
| N+6 | N+6 | N+6 | N+6 |

Figure 6

Figure 7

Figure 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009129493 A1
- FR 2967320 A1

- EP 2985916 A1